# EUROPEAN PATENT SPECIFICATION

(11) **EP 1 486 577 B1**
(45) Date of publication and mention of the grant of the patent: **14.11.2007**
(21) Application number: 04012278.0
(22) Date of filing: 25.05.2004
(51) Int. Cl.: C22C 19/03, H01M 4/86, H01M 8/12

(54) **Fuel cell and anode**
Brennstoffzelle und Anode
Pile à combustible et anode

(30) Priority: 12.06.2003 DK 200300869
(43) Date of publication of application: 15.12.2004
(73) Proprietor: Topsoe Fuel Cell A/S, 2800 Kgs. Lyngby (DK)
(72) Inventor: Hyldtoft, Jens Henrik, 4050 Skibby (DK); Clausen, Bjerne Steffen, 2950 Vedbaek (DK); Besenbacher, Flemming, 8210 Aarhus (DK); Vang, Ronnie, 8000 Aarhus C (DK); Norskov, Jens Kehlet, 2840 Holte (DK); Olsen, Christian Gert Lundtorp, 2750 Ballerup (DK); Vestergaard, Ebbe Kruse, NE Seattle, WA 98105 (US)
(74) Representative: Grünecker, Kinkeldey, Stockmair & Schwanhäusser Anwaltssozietät

(56) References cited:
- EP-A- 0 884 274
- EP-A- 1 378 290
- GB-A- 1 032 754
- US-A- 3 296 030
- DATABASE INSPEC [Online] THE INSTITUTION OF ELECTRICAL ENGINEERS, STEVENAGE, GB; PROCTOR I A ET AL: "Development of anodes for direct electrocatalytic oxidation of methane in solid oxide fuel cells" XP002297313 Database accession no. 7819215 -& PROCTOR I.A. ET AL: "Development of anodes for direct electrocatalytic oxidation of methane in solid oxide fuel cells" IONICS, vol. 9, no. 3-4, 2003, pages 242-247, XP009036783 Ionics Inst. Ionics Germany ISSN: 0947-7047
- DATABASE INSPEC [Online] THE INSTITUTION OF ELECTRICAL ENGINEERS, STEVENAGE, GB; FINNERTY C M ET AL: "Internal reforming and electrochemical performance studies of doped nickel/zirconia anodes in SOFCs running on methane" XP002297314 Database accession no. 6983957 -& FINNERTY C.M., ORMEROD R.M.: "Internal reforming and electrochemical performance studies of doped nickel/zirconia anodes in SOFCs running on methane" PROCEEDINGS OF SOLID OXIDE FUEL CELLS 17-22 OCT. 1999 HONOLULU, HI, USA, 1999, pages 583-592, XP009036863 Solid Oxide Fuel Cells (SOFC VI). Proceedings of the Sixth International Symposium Electrochem. Soc Pennington, NJ, USA ISBN: 1-56677-242-7
- BESENBACHER F ET AL: "Design of a Surface Alloy Catalyst for Steam Reforming" SCIENCE, AMERICAN ASSOCIATION FOR THE ADVANCEMENT OF SCIENCE,, US, vol. 279, 20 March 1998 (1998-03-20), pages 1913-1915, XP002257559 ISSN: 0036-8075
- HASLER P ET AL: "A NOVEL PD-AG MEMBRANE ANODE FOR ALKALINE FUEL CELLS SUITABLE FOR CO2-CONTAINING HYDROGEN" JOURNAL OF POWER SOURCES, ELSEVIER SEQUOIA S.A. LAUSANNE, CH, vol. 45, no. 1, 1 May 1993 (1993-05-01), pages 93-103, XP000409553 ISSN: 0378-7753

## Description

The invention concerns a high temperature fuel cell, in particular a Solid Oxide Fuel Cell (SOFC) or a Molten Carbonate Fuel Cell (MCFC), in which reforming of hydrocarbons takes place in the anode chamber or within the anode itself. In particular, it concerns the use of an anode comprising nickel promoted with gold or silver, thereby making it more resistant towards deposition of carbon.

A SOFC comprises an oxygen-ion conducting electrolyte, a cathode at which oxygen is reduced and an anode at which hydrogen is oxidised. The overall reaction in a SOFC is that hydrogen and oxygen electrochemically react to produce electricity, heat and water.

The anode also comprises a high catalytic activity for the steam reforming of hydrocarbons into hydrogen, carbon dioxide and carbon monoxide. Steam reforming can be described by the reaction of a fuel such as natural gas with steam, and the reactions which take place can be represented by the following equations:

CH₄ + H₂O → CO + 3H₂ (1)

CH₄ + CO₂ → 2CO + 2H₂ (2)

CO + H₂O → CO₂ + H₂ (3)

The fuel gas supplied to the fuel cell contains mostly steam, thus enabling the steam reforming process to occur according to the above equations at the anode surface. The hydrogen produced then reacts in the electrochemical reaction. In addition to the reforming reactions mentioned above, certain carbon forming reactions may occur as follows:

CₘHₙ → mC + (n/2)H₂ (4)

CH₄ → C + 2H₂ (5)

2CO → C + CO₂ (6)

The carbon thereby formed is detrimental in several ways. It decreases the activity of the anode by blocking its active sites. Carbon formation may further cause spalling and pulverization of the anode resulting in breakdown of the fuel cell thus disconnecting the whole stack.

Whether carbon formation takes place is determined by the nature of the feedstock, the operating conditions and the nature of fuel cell anode. Among important operating condition can be mentioned temperature, pressure and steam to hydrocarbon ratio.

As the temperature and the pressure normally are decided due to either electrochemical considerations or mechanical considerations the risk of carbon formation can only be reduced by changing the feedstock, increasing the steam to hydrocarbon ratio or by using a more carbon tolerant anode.

It is well known to prevent carbon formation by increasing the steam to hydrocarbon ratio in the process gas or by reducing the molecular weight of the feedstock. However, increased steam to hydrocarbon ratio is not optimal as the steam addition reduces the voltage of the fuel cell and thereby the power output. Furthermore, the addition of steam to the feedstock means additional cost for evaporation and circulation, which will depreciate the economy of the fuel cell process.

Proctor I.A. et. al. "Development of anodes for direct electrocatalytic oxidation of methane in solid oxide fuel cells" in Ionics, vol. 9, no.3-4, p. 242-247, Finnerty C.M. et al. "Internal reforming and electrochemical performance studies of doped nickel/zirconia anodes in SOFCs running on methane" in Electrochemical Society Proceedings, vol. 99, p. 583-592 and EP-A-0 884 274 disclose the operation of a gold-doped nickel/zirconia anodes in high temperature operation of solid oxide fuel cell.

Various attempts have been made to overcome carbon deposition without affecting the optimum steam to hydrocarbon ratio, such as addition of H₂S, alkali compounds and other metals to nickel. Combinations of nickel and silver or gold are known for use as pellet catalysts are described in US Patent No. 5,997,835, which is incorporated herein by reference. None of these methods are, however, related to anode materials.

Thus, it is the main objective of this invention for a given hydrocarbon feedstock to reduce or prevent carbon formation at the anode in SOFC or MCFC fuel cells by applying an anode, which can operate at a lower steam to hydrocarbon ratio.

We have now observed that addition of small amounts of gold or silver to the nickel containing anode provides an anode with suppressed carbon deposition during steam reforming of hydrocarbons. Although gold and silver decreases the catalytic activity, the anode still provides sufficient activity for steam reforming.

The invention concerns therefore a process for suppressing the formation of solid carbon in a fuel cell comprising contacting a hydrocarbon feedstock with a promoted nickel-comprising anode, the promoter including gold or silver in an amount of 0.001 to 30% by weight calculated on the amount of nickel in the anode.

The invention further concerns an anode for use in the above process.

A reduced risk of carbon formation in the anode of a fuel cell using a hydrocarbon containing feedstock is accomplished by applying an anode in which the risk of carbon formation on the Ni-crystal in the anode is minimised by addition of small amounts of gold or silver to the Ni containing anode. The fuel cell should preferably be an SOFC or a MCFC.

In the invention it is shown that the risk of carbon formation on a SOFC anode is reduced by addition of small amounts of Au or Ag to the anode. Reduced carbon formation is observed with addition of Au or Ag to the anode. The anode can thereby tolerate a lower steam to hydrocarbon ratio at a constant temperature without carbon deposition, when compared to an anode without Ag or Au addition. The reduced carbon formation can also be seen in that the anode with addition of Au or Ag can tolerate a higher maximum temperature at a constant steam to hydrocarbon ratio than an anode with no addition of Ag or Au. The amount of gold or silver should be between 0.001% to 30% by weight calculated on the amount of nickel in the anode. The amount of gold or silver incorporated in the anode will depend on the nickel surface area.

The gold or silver containing nickel anode may be prepared from a conventionally prepared nickel-containing anode by different methods. One method is the impregnation of the anode with solutions containing a soluble gold or silver salt. Suitable salts include chlorides, nitrates, carbonates, acetates or oxalates. Another method is chemical vapour deposition (CVD) of a volatile gold or silver precursor. Suitable precursor compounds include dimethyl (β-diketonato)gold(III) complexes for gold and silver(I) (β-diketonato) complexes for silver. Yet another method includes physical vapour deposition (PVD) of gold or silver metal.

The invention will be further described in the following examples.

### Example 1

A nickel containing anode was impregnated with an aqueous solution of silver nitrate corresponding to 0.2% Ag on the anode. Before impregnation the anode was reduced with hydrogen. The rates of carbon deposition on the Ni anode were measured gravimetrically for various values of temperature between 300°C to 600°C. The temperature was increased by 0.5°C/min. A conventional experimental set-up comprising a heated reactor tube associated with an on-line microbalance was used for the measurement. A piece of anode material (0.1 g) was placed on the basket suspended from one arm of the microbalance. The total flow rate and the concentration of the feed stream passed over the anode are given below:

| | |
|---|---|
| Total flow rate = | 7.8 Nl/h |
| Feed stream: | |
| Butane = | 1.5 vol % |
| Steam = | 1.0 vol % |
| Hydrogen = | 3.5 vol % |
| Helium = | 94.0 vol % |

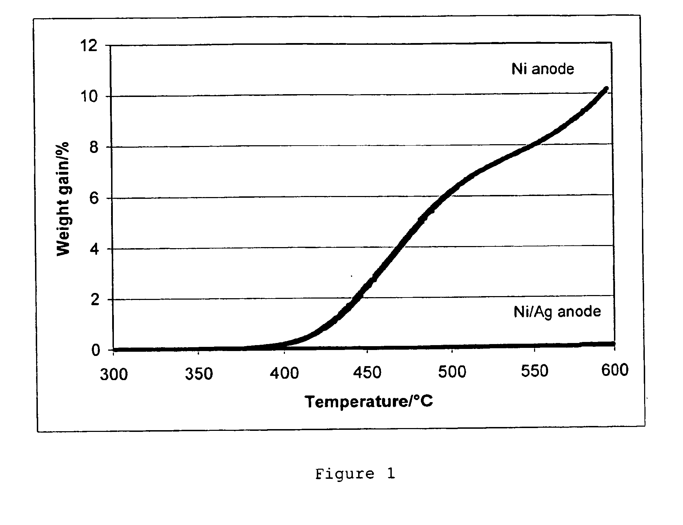

The rate of carbon formation at the above conditions is depicted in Fig. 1 showing the amount of carbon (g carbon/g anode material x 100) deposited on the anode material prepared under this example in comparison to an anode material without silver.

As apparent from the figure, the anode material doped with silver according to the invention provides a highly improved resistance to carbon formation during steam reforming.

### Example 2

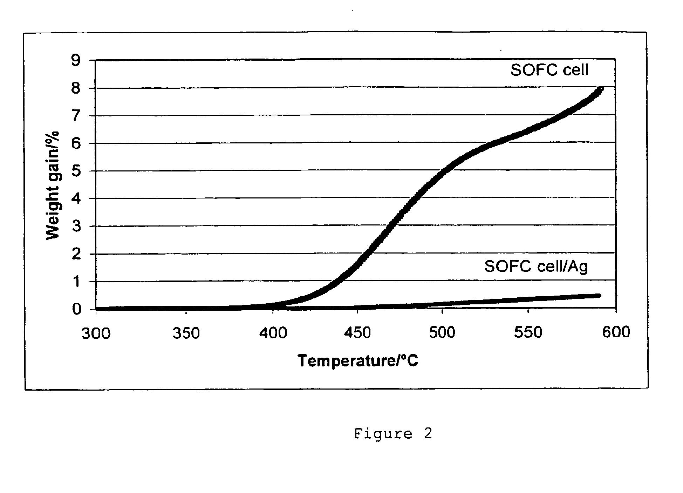

A nickel containing anode in a SOFC was impregnated with 0.2% silver as in Example 1, and the rates of carbon deposition were determined in the same set-up and with the same feed stream as in Example 1. The rate of carbon formation is depicted in Fig. 2 showing the amount of carbon (g carbon/g anode material x 100) deposited on the SOFC material prepared under this example in comparison to a SOFC material without silver.

As is apparent from the figure, the SOFC material doped with silver according to the invention provides a highly improved resistance to carbon formation during steam reforming.

### Example 3

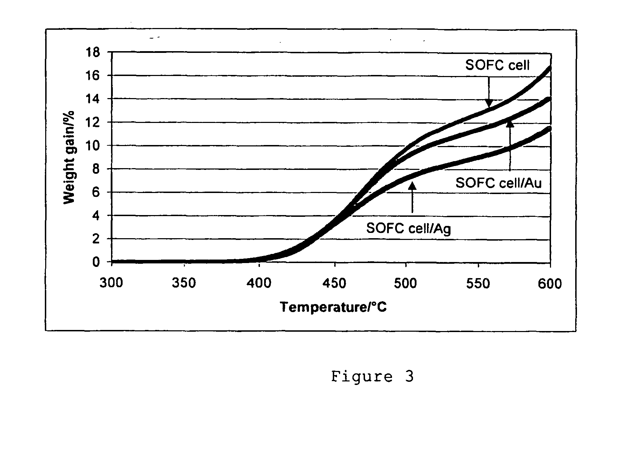

At the nickel containing anode in a SOFC was deposited 10 nm of silver (0.008% Ag) respectively gold (0.014% Au) by argon-ion sputtering and the rates of carbon deposition were determined in the same set-up and with the same feed stream as in Example 1. The rate of carbon formation is depicted in Fig. 3 showing the amount of carbon (g carbon/g anode material x 100) deposited on the SOFC material prepared under this example in comparison to a SOFC material without silver or gold.

As is apparent from Fig. 3, the SOFC material doped with silver or gold according to the invention provides a highly improved resistance to carbon formation during steam reforming.

## Claims

1. Process for suppressing the formation of solid carbon during electrochemical reaction in a solid oxide fuel cell or a molten carbonate fuel cell comprising contacting a hydrocarbon feedstock with a nickel-comprising anode operating at a lower steam to hydrocarbon ratio and promoted with silver, the silver being deposited on the nickel-comprising anode in an amount of 0.001 to 30% by weight calculated on the amount of nickel in the anode.

2. The process of claim 1, wherein the silver is deposited on the nickel-comprising anode by impregnation.

3. The process of claim 1, wherein the silver is deposited on the nickel-comprising anode by chemical vapour deposition.

4. The process of claim 1, wherein the silver is deposited on the nickel-comprising anode by physical vapour deposition.

5. Anode for use in the process of claim 1, wherein the anode operates at a lower steam to hydrocarbon ratio and is a nickel-comprising anode promoted with silver, the silver being deposited on the nickel-comprising anode in an amount of 0.001 to 30% by weight calculated on the amount of nickel in the anode.

## Patentansprüche

1. Verfahren zum Unterdrücken der Bildung von festem Kohlenstoff während einer elektrochemischen Reaktion in einer Festoxid-Brennstoffzelle oder einer Schmelzcarbonat-Brennstoffzelle, umfassend das Inberührungbringen eines Kohlenwasserstoff-Einsatzmaterials mit einer Nickel enthaltenden Anode, die bei einem niedrigeren Verhältnis von Dampf zu Kohlenwasserstoff arbeitet und mit Silber aktiviert ist, wobei das Silber auf der Nickel enthaltenden Anode in einer Menge von 0,001 bis 30 Gew.-%, berechnet auf das Gewicht des Nickels in der Anode, abgeschieden ist.

2. Verfahren nach Anspruch 1, worin das Silber auf der Nickel enthaltenden Anode durch Imprägnierung abgeschieden ist.

3. Verfahren nach Anspruch 1, worin das Silber auf der Nickel enthaltenden Anode durch chemische Dampfabscheidung abgeschieden ist.

4. Verfahren nach Anspruch 1, worin das Silber auf der Nickel enthaltenden Anode durch physikalische Dampfabscheidung abgeschieden ist.

5. Anode zur Verwendung in dem Verfahren nach Anspruch 1, worin die Anode bei einem niedrigeren Verhältnis von Dampf zu Kohlenwasserstoff arbeitet und eine Nickel enthaltende Anode, aktiviert mit Silber, ist, wobei das Silber auf der Nickel enthaltenden Anode in einer Menge von 0,001 bis 30 Gew.-%, berechnet auf die Menge von Nickel in der Anode, abgeschieden ist.

## Revendications

1. Procédé de suppression de la formation de carbone solide durant une réaction électrochimique dans une pile à combustible à oxyde solide ou une pile à combustible à carbonate fondu comprenant la mise en contact d'une charge d'hydrocarbure avec une anode comprenant du nickel fonctionnant à un rapport vapeur sur hydrocarbure inférieur et améliorée par de l'argent, l'argent étant déposé sur l'anode comprenant du nickel en une quantité de 0,001 à 30 % en poids calculée sur la quantité de nickel dans l'anode.

2. Procédé selon la revendication 1, dans lequel l'argent est déposé sur l'anode comprenant du nickel par imprégnation.

3. Procédé selon la revendication 1, dans lequel l'argent est déposé sur l'anode comprenant du nickel par dépôt chimique en phase vapeur.

4. Procédé selon la revendication 1, dans lequel l'argent est déposé sur l'anode comprenant du nickel par dépôt physique en phase vapeur.

5. Anode pour utilisation dans le procédé selon la revendication 1, dans laquelle l'anode fonctionne à un rapport vapeur sur hydrocarbure inférieur, et est une anode comprenant du nickel améliorée par de l'argent, l'argent étant déposé sur l'anode comprenant du nickel à une teneur de 0,001 à 30 % en poids calculée sur la quantité de nickel contenue dans l'anode.
